# EUROPÄISCHE PATENTSCHRIFT

(11) **EP 1 693 125 B1**
(45) Veröffentlichungstag und Bekanntmachung des Hinweises auf die Patenterteilung: **10.12.2008**
(21) Anmeldenummer: 06003390.9
(22) Anmeldetag: 20.02.2006
(51) Int. Cl.: B21D 39/06, F16B 17/00, B60N 2/68

(54) **Hohlkörper-Blechteil-Verbindung**
Tube-plate connection
Connection d'un tube avec une plaque

(30) Priorität: 18.02.2005 DE 102005007716
(43) Veröffentlichungstag der Anmeldung: 23.08.2006
(73) Patentinhaber: Huperz Automotive Systems GmbH & Co KG, 57439 Attendorn (DE)
(72) Erfinder: Arcidiacone, Franco, 59846 Sundern (DE); Huperz, Ulrich, 57439 Attendorn (DE)
(74) Vertreter: Wenzel & Kalkoff

(56) Entgegenhaltungen:
- FR-A- 2 772 317
- US-A- 4 924 584
- US-A1- 2001 035 673

## Beschreibung

Die Erfindung betrifft ein mit einem Hohlkörper verbundenes Blechteil und ein Blechteil mit mindestens einer Ausnehmung zur Verbindung an einen Hohlkörper.

Verbindungen zwischen Blechteilen und Hohlkörpern sowie Verfahren zur Verbindung sind in der Technik gängig und daher im Stand der Technik bekannt. Derartige Verbindungen werden bspw. an Sitzhöhenverstellungen von Kraftfahrzeugsitzen verwendet. Üblicherweise wird das Blechteil hierzu mit einer zylindrischen, runden oder gezahnten Ausnehmung versehen, deren Durchmesser knapp größer ist, als der Durchmesser des Hohlkörpers. Nach einer bekannten Ausführungsform werden Blechteil und Hohlkörper durch mechanische Verformung miteinander verbunden. Allerdings weisen diese Verbindungen begrenzte Drehfestigkeit auf.

Typische Beispiele solcher Verbindungen zeigen die US 4,292,584 und die FR 2 772 317, wobei letztere als gattungsbildender Stand der Technik betrachtet wird. Die FR 2 772 317 zeigt ein Blechteil mit einer Zahnkranz-ähnlichen Ausnehmung, in die ein zylindrisches Werkstück eingesetzt und durch Stauchen fixiert wird.

Es besteht die Aufgabe der vorliegenden Erfindung, ein mit einem Hohlkörper verbundenes Blechteil und ein Blechteil mit mindestens einer Ausnehmung zur Verbindung an einen Hohlkörper die eine festere Verbindung zwischen Hohlkörper und Blechteil ermöglichen.

Diese Aufgabe wird durch die Merkmale der Ansprüche 1 und 8 gelöst.

Diese Aufgabe wird weiter gelöst durch ein Blechteil mit mindestens einer Ausnehmung zur Verbindung mit einem Hohlkörper, das entlang der Ausnehmung mindestens eine Vertiefung aufweist, die geeignet ist, mit dem Hohlkörper derart in Eingriff zu kommen, daß eine formschlüssige und drehfeste Verbindung entsteht, wobei erfindungsgemäß das Blechteil mit mindestens einer Vertiefung bezogen auf eine Achse parallel zu einer Oberfläche des Blechteils konisch ausgeführt ist

Die Vertiefung kann als Kerbe um die Ausnehmung herum angeordnet sein, in dem Bereich, in dem der Hohlkörper verformt wird und Material des Hohlkörpers in diese mindestens eine Ausnehmung einfließt oder verschoben wird.

Zur nochmaligen Verbesserung des formschlüssigen Eingriffs kann das Blechteil zusätzlich direkt an der Innenkante der Ausnehmung ausgebildete Vertiefungen aufweisen. Für eine Vielzahl gängiger Anwendungen von Verbindungen aus Blechteil und zylindrischem Hohlkörper, wie z. B. an Sitzhöhenverstellungen, ist jedoch die Anordnung von Vertiefungen auf einer oder auf beiden Oberflächen des Blechteils bereits ausreichend. Die Vertiefungen sollten hierbei so beschaffen sein, daß eine Aufnahme von verschobenem Material gut möglich ist, bspw. durch geeignete Formgebung. Weiterhin bevorzugt weisen die Vertiefungen senkrecht zur Umfangsrichtung der Ausnehmung Kanten auf, wodurch eine erhöhte Drehfestigkeit erreicht wird.

Das Blechteil kann aber auch eine Innenkante aufweisen, die mit einem Wechsel aus Vertiefungen und zahnrad-artig angeordneten Vorsprüngen ausgebildet ist. Diese Vertiefung zwischen den zahnartigen Vorsprüngen wird erfindungsgemäß ergänzt um die Vertiefung, die durch die konische Ausbildung mindestens eines der Vorsprünge bewirkt wird. Die Vorsprünge verjüngen sich also an mindestens einer Seite vom Ansatz zu ihrem freien Ende hin bezogen auf die Ebene, die durch die Oberfläche des Blechteils gebildet wird. Die Vertiefung ist also nicht nur zwischen den zahnartigen Vorsprüngen ausgebildet sondern die Oberfläche des Blechteils ist ebenfalls mit Vertiefungen gestaltet.

Bei einem Verfahren zur Verbindung eines Blechteils mit einem Hohlkörper, wobei das Blechteil mindestens eine Ausnehmung für den Hohlkörper aufweist, wird das Blechteil entlang der Ausnehmung mit Vertiefungen versehen, der Hohlkörper in die Ausnehmung eingebracht und anschließend mechanisch verformt, so daß der Hohlkörper formschlüssig mit den Vertiefungen in Eingriff kommt. Die Verformung des Hohlkörpers kann durch übliche Verfahren hervorgerufen sein, wie z. B. durch ein mechanisches Stauchen des Hohlkörpers. Die Verbindung sollte je nach Einsatzzweck der Vorrichtung entsprechend üblichen auf die Vorrichtung einwirkenden Torsionskräften standhalten.

Blechteil und Hohlkörper werden meist aus Metall bestehen, jedoch sind auch andere Werkstoffe, insbesondere Verbundwerkstoffe denkbar. Die Ausnehmung in dem Blechteil kann mit allen gängigen Bearbeitungsverfahren gebildet sein, insbesondere bei Metallen durch Bohren oder Prägen. Die Ausnehmung ist in der Regel rund und ihr Durchmesser ist so ausgelegt, daß sich der Hohlkörper einerseits leicht einsetzen lässt und andererseits das beim Fügen der beiden Teile verschobene Material des Hohlkörpers das Blechteil im Randbereich derart umschließt, dass eine formschlüssige Verbindung entsteht. Bevorzugt ist die Ausnehmung an die Formgebung des Hohlkörpers angepasst.

Die Ausnehmung weist eine Innenkante auf, an der der Hohlkörper anliegt, und wobei die Innenkante mit Vertiefungen versehen ist. Unter dem Begriff Innenkante wird die Fläche oder Kante des Blechteils bezeichnet, die unmittelbar die Ausnehmung senkrecht zu den Oberflächen des Blechteils umgibt und deren Kontur mit der Kontur des Hohlkörpers korrespondiert. Zur formschlüssigen und drehfesten Verbindung zwischen Blechteil und zylindrischem Hohlkörper weist das Blechteil entlang der Ausnehmung Vertiefungen auf. Die Vertiefungen nehmen nicht unmittelbar den Hohlkörper auf, sondern dienen der Aufnahme von durch Verformung verschobenem Material des Hohlkörpers. Die Ausnehmung ist im gefügten Zustand zumindest überwiegend durch den Hohlkörper ausgefüllt.

Wie bereits eingangs erläutert, nehmen die Vertiefungen verschobenes Material des Hohlkörpers auf. Die Vertiefungen können daher sämtliche zur Aufnahme von verschobenem Material geeigneten Geometrien aufweisen. Erfindungsgemäß weisen die Vertiefungen Kanten senkrecht zur Umfangsrichtung des Hohlkörpers auf, damit die Verbindung auch bei hohen einwirkenden Kräften drehfest ist. Vertiefungen in der Innenkante der Ausnehmung senkrecht zu den Oberflächen des Blechteils sind bekannt, aber für das Einwirken hoher Kräfte oft nicht ausreichend drehfest. Erfindungsgemäß sind zusätzliche Vertiefungen in einer oder in beiden Oberflächen des Blechteils, die Ausnehmung umgebend angeordnet. Bevorzugt handelt es sich um Kerben entlang des Umfangs der Ausnehmung oder um konisch geformte Vorsprünge an der Innenkante der Ausnehmung. Diese Vertiefungen in mindestens einer Oberfläche des Blechteils bewirkt, daß ein Mehr an verschobenem Material des Hohlkörpers mit dem Blechteil in Eingriff kommen kann.

Es entsteht durch die konische Ausführung weiterer, zur Aufnahme von verschobenem Material des Hohlkörpers geeigneter Raum in Achsrichtung des Hohlkörpers seitlich der zahnartigen Vorsprünge oder entlang der Innenkante der Ausnehmung. Hierdurch wird eine verbesserte Sicherung gegen axiales Verschieben der beiden Teile zueinander erreicht. Weiterhin bevorzugt sind eine Vielzahl von zahnartigen Vorsprüngen konisch ausgeführt. Schließlich hat es sich als vorteilhaft erwiesen, konisch ausgebildete und nicht-konisch ausgebildete zahnartige Vorsprünge nebeneinander anzuordnen , wobei die Aufteilung zwischen konischen und nicht-konischen Vorsprüngen entlang der Innenkante symmetrisch sein sollte. Insbesondere bevorzugt sind jeweils aufeinanderfolgende zahnartige Vorsprünge abwechselnd konisch und nicht-konisch ausgeführt. Eine derartige Ausgestaltung hat sich als besonders vorteilhaft für Verbindungen mit hoher Festigkeit gezeigt.

Alternativ sind auf einer oder auf beiden Oberflächen des Blechteils entlang des Umfangs der Ausnehmung eine oder mehrere Vertiefungen, z. B. Kerben eingearbeitet die konisch zur jeweiligen Oberfläche angeordnet sind.

Die erfindungsgemäß durch die konischen zahnartigen Vorsprünge zusätzlich geschaffenen Vertiefungen gewährleisten eine deutlich erhöhte Drehfestigkeit, ohne dass eine Schwächung der Verbindung durch eine Schwächung des Blechteils feststellbar ist. Das an den zahnartigen Vorsprüngen abgenommene Material des Blechteils trägt also zu einer verbesserten Festigkeit bei anstatt zu einer Schwächung der Verbindung zu führen. Die konische Ausführung der zahnartigen Vorsprünge ist einfach herstellbar, wenn das Blechteil wie üblich durch Prägen und oder Stanzen hergestellt wird.

Die Vertiefungen setzen nach einer vorteilhaften Ausführungsform so an der Ausnehmung an, dass zahnartige Vorsprünge, von denen mindestens einer konisch ausgeführt ist, zwischen den Vertiefungen verbleiben, wenn Ausnehmung und Vertiefung aus dem Blechteil herausgearbeitet werden. Durch diese Ausgestaltung der Innenkante der Ausnehmung ergibt sich eine besonders gute Verbindung zwischen Blechteil und zylindrischem Hohlkörper. Diese Formung ist ferner mit üblichen Präge- oder Stanzwerkzeugen möglich. Weiterhin bevorzugt ist, daß insbesondere bei kreisrunden Ausnehmungen, die Innenkante der Ausnehmung als Zahnkranz bzw. Innenzahnrad ausgebildet ist. Weiterhin bevorzugt weist ein derartiger Zahnkranz auf dem Umfang der Ausnehmung 23 Zähne auf. Eine derartige Ausbildung hat sich als besonders vorteilhaft für eine ausreichende mechanische Stabilität der Verbindung gezeigt. Die Formung von Zähnen ist insbesondere auch dadurch vorteilhaft, daß die Vertiefungen seitlich in Umfangsrichtung der Ausnehmung begrenzt sind, wodurch eine erhöhte Drehfestigkeit gegeben ist.

Nach einer vorteilhaften Weiterbildung ist zwischen zwei benachbarten Vertiefungen ein flächenartiger Abschnitt der Innenkante vorhanden. Hierdurch verbleibt auch bei Einbringen einer Vielzahl von Vertiefungen in das Blechteil jedenfalls ein Teil der Innenkante, der bevorzugt zur reibschlüssigen Anlage an den Hohlkörper ausgelegt ist. Vorteilhaft ist folglich die Reibungsfläche zwischen Blechteil und Hohlkörper auch bei einer Vielzahl von vorhandenen Vertiefungen erhöht, wodurch ein nochmals verbesserter formschlüssiger Eingriff gegeben ist. Bei Ausbildung eines zahnartigen Vorsprunges zwischen zwei benachbarten Vertiefungen schneiden sich folglich die Flanken des zahnartigen Vorsprunges, die die beiden Vertiefungen begrenzen, nicht auf der Innenkante.

Nach einer weiteren, vorteilhaften Weiterbildung der Erfindung ist die Vertiefung, die zur konischen Ausbildung der zahnartigen Vorsprünge führt, in mindestens einer Oberfläche des Blechteils ausgeführt. Die Vertiefung ist derart an dem zahnartigen Vorsprung ausgeführt, daß verschobenes Material des Hohlkörpers bei Verformung mit den Vertiefungen in Eingriff kommt. Das Blechteil kann hierbei auf einer oder auf beiden Oberflächen Vertiefungen aufweisen, wobei bevorzugt beide Oberflächen Vertiefungen aufweisen.

Zweckmäßig ist die Ausnehmung an den Querschnitt des aufzunehmenden Hohkörpers angepasst. Am häufigsten werden zylindrische Hohlkörper in runden Ausnehmungen aufzunehmen sein, wobei der Durchmesser der Ausnehmung gleich oder geringfügig größer ist als der Durchmesser des Hohlkörpers. Hierdurch wird gewährleistet, daß der Hohlkörper leicht in die Ausnehmung einbringbar ist und trotzdem ein reibschlüssiger Eingriff mit der Innenkante gegeben ist. Vorteilhaft ist der Hohlkörper mit dem Blechteil formschlüssig, nicht jedoch stoffschlüssig in Eingriff.

Bevorzugt ist die Verbindung zwischen Hohlkörper und Blechteil drehfest und axial gesichert . Die Verbindung ist hierbei so ausgebildet, daß zum einen ein formschlüssiger und drehfester Eingriff gegeben ist und des weiteren die Verbindung eine axiale Sicherung des Hohlkörpers an dem Blechteil sicherstellt und so eine axiale Verschiebung des Blechteils gegenüber dem Hohlkörper verhindert. Eine derartige axiale Sicherung kann insbesondere mit der eingangs erwähnten Ausgestaltung der Innenkante der Ausnehmung mit Zähnen erreicht werden.

Zweckmäßig ist die Verformung des Hohlkörpers eine Stauchung. Eine Stauchung des Hohlkörpers ist vorteilhaft leicht durch übliche technische Verfahren erreichbar. Des weiteren ist es mittels einer Stauchung leicht möglich, den Fluß des Materials so zu steuern, daß das verschobene Material nach der Verformung mit den Vertiefungen in Eingriff kommt.

Zweckmäßig ist an dem Hohlkörper mindestens ein Wulst vorhanden, welcher durch die Stauchung mit den Vertiefungen in Eingriff ist. Unter einem Wulst wird hierbei ein U-förmiger Überstand des Materials über die ursprüngliche Umfangslinie des Hohlkörpers verstanden. Ein Wulst läßt sich vorteilhaft durch eine Stauchung leicht bilden. Ein derartiger Wulst kommt vorteilhaft entlang der kompletten Umfangslinie mit den Vertiefungen des Blechteils in Eingriff, wodurch eine besonders gute Verbindung gewährleistet ist Insbesondere vorteilhaft für einen nochmals verbesserten Eingriff ist das Vorsehen von je einem Wulst pro Seite des Blechteils bei Ausbildung von Vertiefungen auf beiden Seiten des Blechteils oder an der Innenkante der Ausnehmung.

Zur Verbindung des Hohlkörpers an das Blechteil werden zunächst Ausnehmung und Vertiefungen in das Blechteil, bspw. durch ein geeignetes Stanzwerkzeug, eingebracht. Nach Formung einer ersten Wulst am Hohlkörper, bspw. durch Stauchung, ist eine erste Anlagefläche für das Blechteil entstanden. Dann wird der Hohlkörper in die Ausnehmung bündig mit dem Wulst eingeschoben. Durch erneutes Stauchen des Abschnitts des Hohlkörpers, welcher der Seite des Blechteils gegenüberliegt, an dem der zuvor geformte erste Wulst anliegt, wird ein zweiter Wulst gebildet. Hierdurch gelangt das verschobene Material des Hohlkörpers mit den Vertiefungen in Eingriff, wodurch die Verbindung gebildet ist.

Die Erfindung wird nachstehend anhand von Ausführungsbeispielen erläutert. In den Figuren zeigt
- Fig. 1: eine Draufsicht einer ersten Ausführungsform des erfindungsgemäßen Blechteils;
- Fig. 2: eine perspektivische Ansicht eines Ausschnitts der in Fig. 1 gezeigten ersten Ausführungsform des Blechteils ;
- Fig. 3: eine weitere perspektivische Ansicht der ersten Ausführungsform gemäß Fig. 1;
- Fig. 4: eine Schnittansicht des Blechteils gemäß der ersten Ausführungsform im gefügten Zustand zusammen mit einem Hohlkörper und
- Fig. 5: eine Draufsicht eines erfindungsgemäßen Blechteils gemäß einer zweiten Ausführungsform.

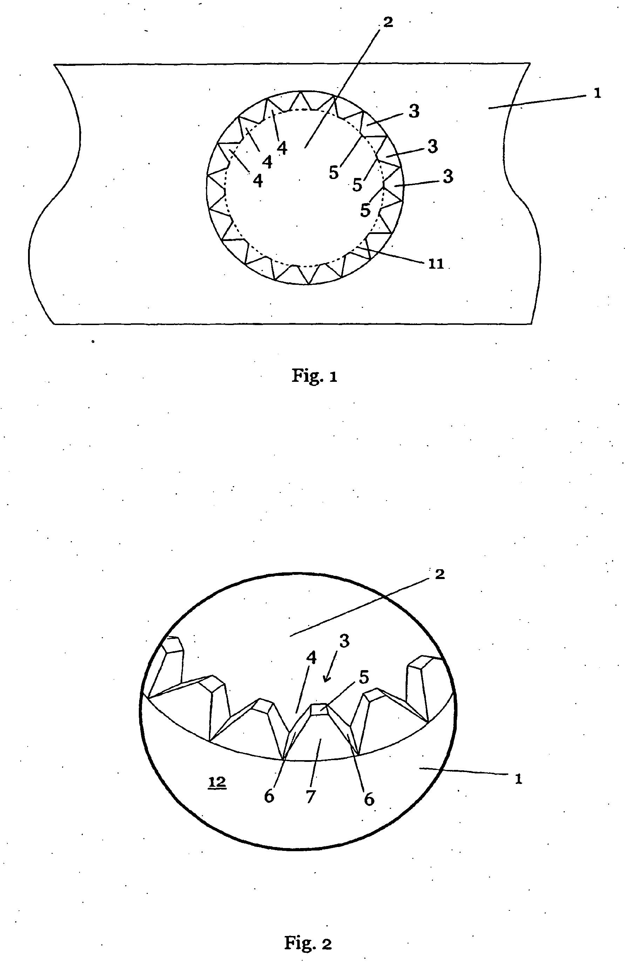

Fig. 1 zeigt eine erste Ausführungsform eines erfindungsgemäßen Blechteils 1 mit einer Ausnehmung 2 zur Verbindung an einen Hohlkörper. Das Blechteil 1 weist entlang der Innenkante 11 der Ausnehmung 2 Vertiefungen 4 auf. Zwischen den Vertiefungen 4 sind auf der gesamten Umfangslinie der Ausnehmung Zähne 3 ausgebildet. Zur besseren Übersicht sind nur einige Zähne 3 in den Figuren mit Bezugszeichen versehen. Die Bezeichnungen sind jedoch analog für sämtliche Zähne. Die Vertiefungen 4 nehmen verschobenes Material eines in die Ausnehmung 2 eingebrachten Hohlkörpers, wie bspw. eines Rohres, auf. Eine entsprechende mechanische Verformung des Rohres kann bspw. durch eine Stauchung erreicht werden. Die Zähne 3 weisen ferner eine ebene Kopffläche 5 auf, wodurch die Eingriffsfläche des Blechteils entlang der Innenkante 11 mit einem eingebrachten Rohr im gefügten Zustand crhöht ist. Der Durchmesser der Ausnehmung 2 an der Innenkante 11 ist geringfügig größer als der Umfang des Rohres.

Fig. 2 zeigt hierzu einen Ausschnitt des Zahnkranzes gemäß der ersten Ausführungsform. Die eingangs erwähnte ebene Kopffläche 5 des Zahns 3 wird in Umfangsrichtung durch zwei Flanken 6 begrenzt. Die Flanken 6 sind zum Kopf des Zahns hin konisch ausgeführt. Seitenflächen 7 begrenzen den Zahn 3 in Achsrichtung der Ausnehmung 2 ebenfalls konisch.

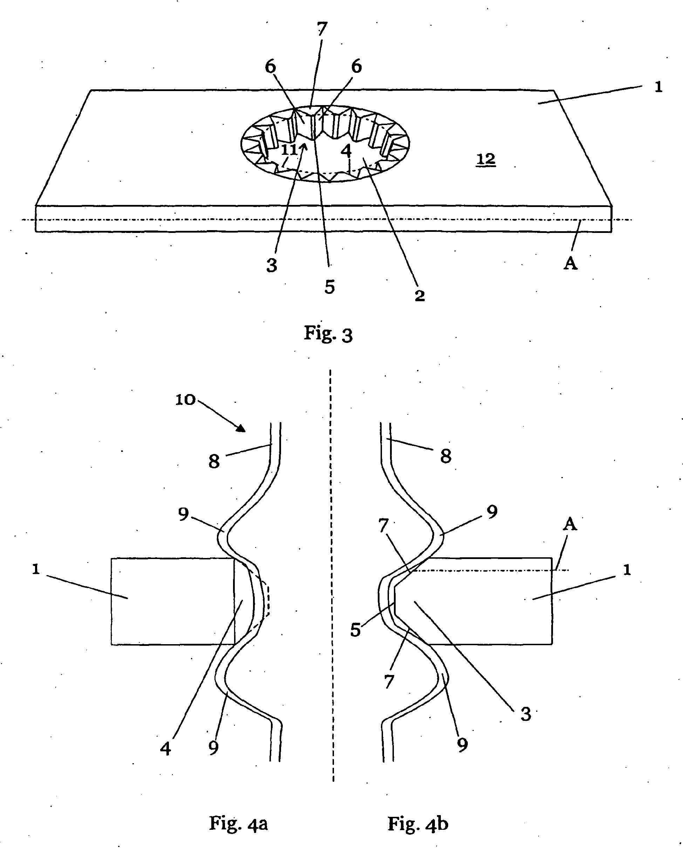

Unter dem Begriff Seitenflächen 7 des Zahns 3 werden somit diejenigen Flächen verstanden, die den Zahn 3 in Umfangsrichtung der Ausnehmung 2 seitlich begrenzen und somit an die beiden eingangs erwähnten Flanken 6 des Zahns 3 anschließen. Die Seitenflächen 7 verlaufen konisch bezogen auf eine Achse A (siehe Fig. 4b), die parallel zur Oberfläche 12 des Blechteils1 verlauft. Durch eine in Richtung des Zahnkopfes aufeinanderzulaufende, konische Ausbildung der Seitenflächen 7 des Zahns 3 kann der Eingriff von verschobenem Material des Hohlkörpers mit dem Blechteil 1 durch den dadurch entstehenden weiteren Raum nochmals verbessert werden. Alternativ (nach einer hier nicht dargestellten Ausführungsform) könnten die Seitenflächen 7 des Zahns 3 auch so geformt sein, daß diese im Fußbereich des Zahns 3 aufeinanderzulaufen.

Die erste Ausführungsform gemäß Fig. 1 ist in einer weiteren perspektivischen Ansicht in Fig. 3 gezeigt. Deutlich erkennbar ist die Anordnung der Vertiefungen 4 an der Innenkante 11 der Ausnehmung 2. Die Vertiefungen 4 erstrecken sich entlang der gesamten Dicke des Blechteils 1.

Zur Verbindung des Blechteils 1 mit einem Rohr 10 wird das Rohr 10 in die Ausnehmung 2 eingebracht Um eine besonders drehfeste Verbindung zu schaffen, sollte das Rohr 10 bereits reibschlüssig an der Innenkante 11, also an die ebenen Kopfflächen 5 der Zähne 3 anliegen. Zur vollständigen formschlüssigen Verbindung des Blechteils 1 mit dem Rohr 10 werden beide Teile fixiert. Anschließend wird das Rohr 10 durch Ausübung einer Kraft in Achsrichtung gestaucht. Hierdurch wird das Material der Rohrwandung 8 verschoben, was in einer Schnittansicht in Fig. 4a und 4b dargestellt ist.

Die Figuren 4a und 4b zeigen eine vergrößerte Darstellung des Blechteils 1 mit dem Rohr 10 im gefügten Zustand, wobei die Rohrwandung 8 durch eine Stauchung verformt wurde. Fig. 4a zeigt eine Ausführung nach dem Stand der Technik, Fig. 4b zeigt die Ausführungsform gemäß der Fig.1-3.

Fig. 4a zeigt einen Schnitt entlang der Achsrichtung des Rohres 10 durch eine Vertiefung 4 im Blechteil 1. Das Material der Rohrwandung 8 hat die Vertiefung teilweise ausgefüllt. Ferner haben sich zwei Wulste 9 gebildet, die an die Kanten der Oberflächen des Blechteils angeformt sind. Der Eingriff der Rohrwandung 8 in die Vertiefung 4 sorgt für eine hohe Drehfestigkeit, bedingt durch die seitlich der Vertiefung 4 ausgebildeten Zähne 3 des Blechteils 1.

Fig. 4b zeigt einen Schnitt analog zu Fig. 4a, wobei der Schnitt in Fig. 4b entlang eines Zahnes 3 des Blechteils 1 erfolgt ist. Die Rohrwandung 8 des Rohres 10 ist an die Seitenflächen 7 sowie die Kopffläche 5 des Zahnes 3 angeformt. Deutlich erkennbar ist die Anformung der Rohrwandung 8 an den Zahn 3, bedingt durch die konischen, zur Kopffläche 5 abfallenden Seitenflächen 7 des Zahns 3. Die flach ausgeführte Kopffläche 5 des Zahns 3 verbessert den Eingriff des Blechteils 1 mit dem Rohr 10 nochmals. Der Eingriff des Rohres 10 mit dem Zahn 3 sorgt für eine axiale Sicherung des Blechteils 1 an dem Rohr 10.

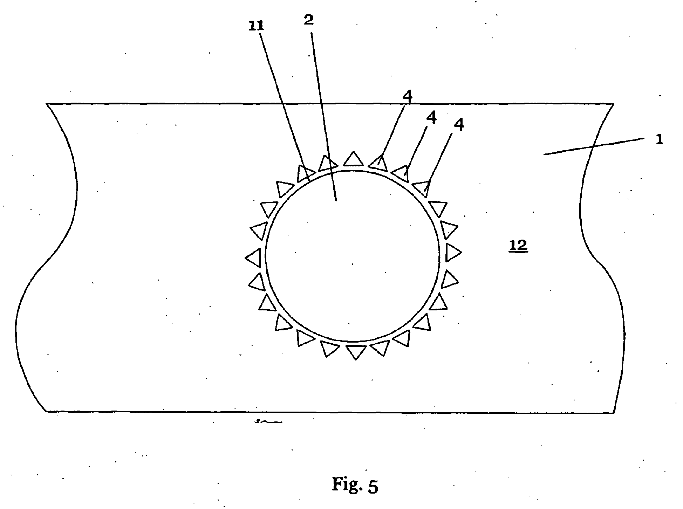

Fig. 5 zeigt eine zweite Ausführungsform der Erfindung. Das Blechteil 1 weist ebenfalls eine Ausnehmung 2 auf. Im Unterschied zu der ersten Ausführungsform sind die Vertiefungen 4 nicht direkt entlang der Innenkante 11 der Ausnehmung 2 in das Blechteils 1 geformt, sondern in der die Ausnehmung umgebende Oberfläche des Blechteils 1. Die rückseitige, nicht erkennbare Oberfläche des Blechteils 1 ist ebenfalls entsprechend der gezeigten Oberfläche ausgebildet. Die Vertiefungen 4 dienen ebenfalls zur Aufnahme von verschobenem Material 1 eines Rohres 10 im gefügten Zustand der Vorrichtung. Die Vertiefungen 4 sind durch einen Prägevorgang in die Oberflächen des Blechteils 1 eingebracht. Die dreieckförmige Ausbildung der Vertiefungen 4 sorgt für eine hohe Drehfestigkeit der Verbindung. Der Abstand der Ausnehmungen 4 von der Innenkante 11 der Ausnehmung 2 ist so bemessen, daß verschobenes Material des Rohres 10 mit den Ausnehmungen in Eingriff kommen kann.

## Patentansprüche

1. Mit einem Hohlkörper verbundenes Blechteil (1), wobei das Blechteil (1) mindestens eine Ausnehmung (2) für den Hohlkörper aufweist, das Blechteil (1) entlang der Ausnehmung (2) Vertiefungen (4) und Vorsprünge (3) aufweist, mit denen der Hohlkörper durch Verformung formschlüssig in Eingriff ist, so daß eine drehfeste Verbindung gebildet ist,
**dadurch gekennzeichnet, daß**
mindestens ein Vorsprung (3) sich an mindestens einer Seite vom Ansatz zu seinem freien Ende (5) verjüngt, bezogen auf die Ebene, die durch die Oberfläche des Blechteils (1) gebildet wird.

2. Mit einem Hohlkörper verbundenes Blechteil (1) nach Anspruch 1, **dadurch gekennzeichnet, dass** nur ein Teil der zahnartigen Vorsprünge (3) sich vom Ansatz zu seinem freien Ende verjüngt.

3. Mit einem Hohlkörper verbundenes Blechteil (1) nach einem der vorangehenden Ansprüche,
**dadurch gekennzeichnet, daß**
die Ausnehmung (2) rund ist und der Durchmesser der Ausnehmung (2) gleich oder geringfügig größer ist, als der Durchmesser des Hohlkörpers.

4. Mit einem Hohlkörper verbundenes Blechteil (1) nach einem der vorangehenden Ansprüche, **dadurch gekennzeichnet, daß** der Hohlkörper mit dem Blechteil (1) formschlüssig, nicht jedoch stoffschlüssig in Eingriff ist.

5. Mit einem Hohlkörper verbundenes Blechteil (1) nach einem der vorangehenden Ansprüche, **dadurch gekennzeichnet, daß** die Verbindung zwischen zylindrischem Hohlkörper und Blechteil (1) drehfest und axial gesichert ist.

6. Mit einem Hohlkörper verbundenes Blechteil (1) nach einem der vorangehenden Ansprüche, **dadurch gekennzeichnet, daß** die Verformung des Hohlkörpers eine Stauchung ist.

7. Mit einem Hohlkörper verbundenes Blechteil (1) nach einem der vorangehenden Ansprüche, **dadurch gekennzeichnet, daß** an dem Hohlkörper mindestens ein Wulst (9) vorhanden ist, welcher durch die Verformung mit den Vertiefungen (4) in Eingriff ist.

8. Blechteil (1) mit mindestens einer Ausnehmung (2) zur Verbindung mit einem Hohlkörper mit mindestens einer Vertiefung (4), die geeignet ist, mit dem Hohlkörper derart in Eingriff zu kommen, daß eine formschlüssige und drehfeste Verbindung entsteht,
**dadurch gekennzeichnet, daß**
mindestens ein Vorsprung (3) sich an mindestens einer Seite vom Ansatz zu seinem freien Ende (5) verjüngend ausgeführt ist gemäß einem der Ansprüche 1-3.

9. Blechteil (1) mit mindestens einer Ausnehmung (2) zur Verbindung mit einem Hohlkörper nach Anspruch 8, **dadurch gekennzeichnet, daß** mindestens ein Vorsprung (3) einen flächenartigen Abschnitt (5) an der Innenkante (11) aufweist.

## Claims

1. A sheet metal part (1) connected to a hollow body, wherein the sheet metal part (1) has at least one opening (2) for the hollow body, the sheet metal part (1) along the opening (2) has recesses (4) and projections (3) with which the hollow body is in positive engagement by means of deformation such that a torque-proof connection is formed,
**characterized in that**
at least one projection (3) on at least one side, tapers from the base to its free end (5) relative to the plane that is formed by the surface of the sheet metal part (1).

2. The sheet metal part (1) connected to a hollow body according to Claim 1, **characterized in that** only a portion of the tooth-like projections (3) is tapered from the base to its free end.

3. The sheet metal part (1) connected to a hollow body according to one of the preceding claims,
**characterized in that**
the opening (2) is round and the diameter of the opening (2) is the same as, or marginally larger than, the diameter of the hollow body.

4. The sheet metal part (1) connected to a hollow body according to one of the preceding claims, **characterized in that** the hollow body is in positive engagement with the sheet metal part (1), however, not bonded.

5. The sheet metal part (1) connected to a hollow body according to one of the preceding claims, **characterized in that** the connection between cylindrical hollow body and sheet metal part (1) is torque-proof and axially secured.

6. The sheet metal part (1) connected to a hollow body according to one of the preceding claims, **characterized in that** the deformation of the hollow body is a compression.

7. The sheet metal part (1) connected to a hollow body according to one of the preceding claims, **characterized in that** at least one bead (9) is present on the hollow body, that is in engagement with the recesses (4) by means of deformation.

8. A sheet metal part (1) with at least one opening (2) for the connection to a hollow body with at least one recess (4), which is suited to come into engagement with the hollow body such that a positive and torque-proof connection arises,
**characterized in that**
at least one projection (3) is designed according to one of the Claims 1 to 3, tapered on at least one side from the base to its free end (5).

9. The sheet metal part (1) with at least one opening (2) for the connection to a hollow body according to Claim 8, **characterized in that** at least one projection (3) has a surface-like section (5) on the inner edge (11).

## Revendications

1. Pièce de tôle (1) reliée à un corps creux, la pièce de tôle (1) comprenant au moins un évidement (2) pour le corps creux, la pièce de tôle (1) présentant le long de l'évidement (2) des encoches (4) et des saillies (3), avec lesquelles le corps creux est en prise par complémentarité de forme et par déformation de façon à former une connexion résistante à la torsion,
**caractérisée en ce que**
au moins une saillie (3) s'amincit sur au moins une face de la base à son extrémité libre (5), par rapport au plan qui est formé par la surface de la pièce de tôle (1).

2. Pièce de tôle (1) reliée à un corps creux selon la revendication 1, **caractérisée en ce que** seule une partie des saillies (3) dentées s'amincit de la base à son extrémité libre.

3. Pièce de tôle (1) reliée à un corps creux selon une des revendications précédentes,
**caractérisée en ce que**
l'évidement (2) est rond et le diamètre de l'évidement (2) est identique ou légèrement supérieur au diamètre du corps creux.

4. Pièce de tôle (1) reliée à un corps creux selon une des revendications précédentes, **caractérisée en ce que** le corps creux est en prise avec la pièce de tôle (1) par complémentarité de forme, mais pas par complémentarité de matière.

5. Pièce de tôle (1) reliée à un corps creux selon une des revendications précédentes, **caractérisée en ce que** la connexion entre le corps creux cylindrique et la pièce de tôle (1) est résistante à la torsion et axialement verrouillée.

6. Pièce de tôle (1) reliée à un corps creux selon une des revendications précédentes, **caractérisée en ce que** la déformation du corps creux est une déformation sous pression.

7. Pièce de tôle (1) reliée à un corps creux selon une des revendications précédentes, **caractérisée en ce qu'**au moins un boudin (9) est présent sur le corps creux, ce boudin étant en prise par la déformation avec les encoches (4).

8. Pièce de tôle (1) comprenant au moins un évidement (2) pour la connexion avec un corps creux comprenant au moins une encoche (4) qui est adaptée pour entrer en prise avec le corps creux de façon à créer une connexion par complémentarité de forme et résistante à la torsion,
**caractérisée en ce que**
au moins une saillie (3) est réalisée s'amincissant sur au moins une face de la base à son extrémité libre (5) selon une des revendications 1 à 3.

9. Pièce de tôle (1) comprenant au moins un évidement (2) pour la connexion avec un corps creux selon la revendication 8, **caractérisée en ce qu'**au moins une saillie (3) présente une partie plane (5) sur l'arête interne (11).
